# EUROPÄISCHE PATENTSCHRIFT

(11) **EP 4 044 766 B1**
(45) Veröffentlichungstag und Bekanntmachung des Hinweises auf die Patenterteilung: **09.08.2023**
(21) Anmeldenummer: 22156311.7
(22) Anmeldetag: 11.02.2022
(51) Int. Cl.: H05B 3/50, B60H 1/22, F24H 3/04, F24H 9/1863

(54) **ELEKTRISCHE HEIZVORRICHTUNG**
ELECTRIC HEATING DEVICE
DISPOSITIF DE CHAUFFAGE ÉLECTRIQUE

(30) Priorität: 11.02.2021 DE 102021103266
(43) Veröffentlichungstag der Anmeldung: 17.08.2022
(73) Patentinhaber: Eberspächer catem GmbH & Co. KG, 76863 Herxheim (DE)
(72) Erfinder: Walz, Kurt, 76767 Hagenbach (DE); Niederer, Michael, 76889 Kapellen-Drusweiler (DE)
(74) Vertreter: Grünecker Patent- und Rechtsanwälte PartG mbB

(56) Entgegenhaltungen:
- EP-A1- 2 022 687
- US-A1- 2017 130 991
- US-A1- 2017 370 614
- US-B1- 6 330 395

## Beschreibung

Die vorliegende Erfindung betrifft eine elektrische Heizvorrichtung mit mindestens zwei, in der Regel im Querschnitt identisch ausgebildeten Hohlprofilelementen, die in ihrem Innern jeweils zumindest einen Fluidkanal für ein zu erwärmendes Fluid und auf der dem Fluidkanal gegenüberliegenden Außenseite aneinander gegenüberliegende Kontaktflächen ausbilden, an denen zumindest ein PTC-Element wärmeleitend anliegt.

Eine elektrische Heizvorrichtung mit den oberbegrifflichen Merkmalen von Anspruch 1 ist aus EP 0 899 985 A1 der Anmelderin bekannt. Bei diesem Stand der Technik bestehen die Hohlprofilelemente jeweils aus Strangpressprofilen, die zur genauen Positionierung relativ zueinander benachbart zu den Kontaktflächen Schrägflächen ausbilden, durch welche die Hohlprofilelemente in einer Ebene parallel zu der Kontaktfläche unter Einschluss des PTC-Elementes positioniert werden. Ein Zusammenhalt einer Stapelung von mehreren Hohlprofilelementen ergibt sich erst durch Federbügel, die auf gegenüberliegenden Seiten in Höhenrichtung des Stapels anliegen und die einzelnen Elemente der Stapelung gegeneinander anliegen. Dabei sollen die PTC-Elemente und ihnen zugeordnete Elektrodenbleche unter leichtem Druck gegeneinander anliegen.

Die Herstellung der vorbekannten Vorrichtung ist aufwendig. Die exakte Positionierung und der exakte Einschluss der PTC-Heizelemente zwischen den einzelnen Hohlprofilelementen ist abhängig von der exakten Einhaltung von Toleranzen.

Davon ausgehend liegt der vorliegenden Erfindung die Aufgabe zugrunde, eine elektrische Heizvorrichtung anzugeben, die aus einer Vielzahl von Hohlprofilelementen gebildet sein kann, sich allerdings auch schon im Rahmen der Herstellung besser handhaben lässt, ohne dass es der Einhaltung enger Toleranzen bedarf.

Zur Lösung dieses Problems wird mit der vorliegenden Erfindung eine elektrische Heizvorrichtung mit den Merkmalen von Anspruch 1 vorgeschlagen.

Die elektrische Heizvorrichtung hat mindestens zwei Hohlprofilelemente, die bevorzugt identisch ausgebildet sind. Diese beiden Hohlprofilelemente bilden zumindest einen Fluidkanal für ein zu erwärmendes Fluid und gegenüberliegend zu dem Fluidkanal eine Heizkammer aus, die von einander gegenüberliegenden Kontaktflächen begrenzt ist, an denen zumindest ein PTC-Element wärmeleitend anliegt. Die Hohlprofilelemente können wie bei dem Stand der Technik durch Strangpressprofile ausgebildet sein. So lässt sich die elektrische Heizvorrichtung durch entsprechendes Ablängen der Hohlprofilelemente skalierbar und mit unterschiedlicher Wärmeleistung herstellen, indem entweder die Hohlprofilelemente für sich mit an die Heizleistung angepasster Länge und/oder die Anzahl der verbauten Hohlprofilelemente zur Herstellung der elektrischen Heizvorrichtung entsprechend angepasst wird. Die Hohlprofilelemente sind für sich einerseits Gehäuse zur Aufnahme des PTC-Elementes, bilden dabei aber auch jeweils zumindest einen Teil eines Fluidkanals und damit die Mittel zur Führung des zu erwärmenden Fluids aus.

Die Formschlusssegmente benachbarter Hohlprofilelemente sind komplementär, worunter zu verstehen ist, dass Formschlusssegmente benachbarter Hohlprofilelemente die beiden benachbarten Hohlprofilelemente unmittelbar miteinander verbinden. Die Verbindung ist dabei derart, dass die Hohlprofilelemente als Einheit gehandhabt werden können. Die Formschlusssegmente schaffen auch eine Verbindung der beiden Hohlprofilelemente in einer Richtung orthogonal zu der Kontaktfläche. So kann das eine der Hohlprofilelemente nicht ohne das andere der Hohlprofilelemente gehandhabt werden.

Komplementäre Formschlusssegmente sind insbesondere dadurch geschaffen, dass das Formschlusssegment des einen Hohlprofilelementes ein männliches und das Formschlusssegment des gegenüberliegenden Hohlprofilelementes ein weibliches Kontaktelement ausbilden, die nach dem Fügen eine Verbindung der beiden Hohlprofilelemente bewirken. Zu bevorzugen ist die Ausbildung der Formschlusssegmente als korrespondierende Stützsegmente.

Die beiden Hohlprofilelemente können im verbundenen Zustand einen Fluidkanal zwischen sich einschließen und abdichten. Bevorzugt bilden die zwei miteinander verbundenen Hohlprofilelemente indes zwischen sich die Heizkammer. So werden die einander gegenüberliegenden Kontaktflächen jeweils durch eines der Hohlprofilelemente gebildet. Durch die komplementären Formschlusssegmente kann ein solches PTC-Element nicht mehr ohne Weiteres nach dem Verbinden der Hohlprofilelemente aus der zwischen den gegenüberliegenden Kontaktflächen gebildeten Heizkammer entnommen werden. Vielmehr sind die Kontaktflächen bei dieser Ausgestaltung der elektrischen Heizvorrichtung jeweils seitlich von komplementären Formschlusssegmenten überragt, über welche die beiden Hohlprofilelemente miteinander verbunden sind.

Die kleinste Ausgestaltung der erfindungsgemäßen Heizvorrichtung ist üblicherweise dadurch geschaffen, dass zwischen zwei Kontaktflächen, die durch ein erstes Hohlprofilelement gebildet sind, zumindest ein PTC-Heizelement vorgesehen und wärmeleitend gegen die Kontaktflächen angelegt ist. Dieses Hohlprofilelement bildet auch üblicherweise einen Fluidkanal aus. Der andere Fluidkanal wird auf der gegenüberliegenden Seite zwischen diesem einen Hohlprofilelement und einem weiteren Hohlprofilelement ausgebildet, das über die Formschlusssegmente mit dem einen Hohlprofilelement verbunden ist.

Dabei kann das eine Hohlprofilelement Formschlusssegmente an beiden gegenüberliegenden Seiten aufweisen und somit in eine Stapelung einer Vielzahl von identischen Hohlprofilelementen eingefügt werden, bei denen jeweils das PTC-Element innerhalb einer Heizkammer vorgesehen ist, die über ein einziges Hohlprofilelement ausgebildet wird. Dabei kann eine der Hauptwandungen des Hohlprofilelementes, die sich parallel zu der Kontaktfläche erstreckt, ballig gegebenenfalls auch mit einer nach innen vorspringenden Kontaktfläche ausgebildet sein. Zwischen dieser Kontaktfläche und dem äußeren Rand kann das Hohlprofilelement einen im Querschnitt verminderten Verformungsbereich haben, auf den ein Verformungswerkzeug einwirkt, nachdem das PTC-Element in die Heizkammer eingebracht und bevor das andere Hohlprofilelement mit dem einen Hohlprofilelement verbunden worden ist.

In dem Fluidkanal können Rippen vorgesehen sein, die von der Hauptwandung abragen und die Wärmeübertragung an das zu erwärmende und in dem Fluidkanal strömende Medium verbessern.

Die Formschlusssegmente überragen bevorzugt die jeweiligen Kontaktflächen zu dem zumindest einen PTC-Element seitlich. Das PTC-Element befindet sich dementsprechend in Erstreckungsrichtung des Hohlprofilelementes zwischen den beiden Formschlusssegmenten. So schaffen die miteinander verbundenen Formschlusssegmente auch eine außenseitige Einhausung des PTC-Elementes und der üblicherweise dazu vorgesehenen Leiterbahnen, die zur Bestromung des PTC-Elementes mit unterschiedlicher Polarität kontaktiert und in der Regel planparallel zu der Kontaktfläche vorgesehen sind. Zwischen der Kontaktfläche und diesen Leiterbahnen kann ferner eine elektrische Isolierung vorgesehen sein, die einen unmittelbaren elektrischen Kontakt zwischen den Leiterbahnen und den üblicherweise aus Metall ausgebildeten Hohlprofilelementen verhindert. Die Hohlprofilelemente können aber auch aus einer Keramik ausgebildet sein. In diesem Fall kann auf eine Isolierung verzichtet werden.

Für die stoffliche Beschaffenheit der Hohlprofilelemente ist lediglich bedeutsam, dass sich diese kostengünstig mittels Extrusion beziehungsweise Strangpressen oder Fließpressen herstellen lassen. So können die Hohlprofilelemente aus Aluminium gebildet sein. Ebenso gut können die Hohlprofilelemente als Grünling einer fließfähigen Masse enthaltend einen erheblichen Anteil an Keramikpartikeln extrudiert und im Anschluss entbindert und gesintert sein.

Gemäß einer bevorzugten Weiterbildung der vorliegenden Erfindung bilden die Formschlusssegmente eine Nut-Feder-Verbindung aus. Dabei ist die Feder bevorzugt nach Art eines Stützelementes formschlüssig in der Nut verrastet. Die Nut hat dazu vorzugsweise einen Kopf, dessen Breite größer als der Mund der Nut ist. So kann der Kopf der Feder unter elastischer Aufweitung der die Nut begrenzenden Wandsegmente in die Nut eingepresst werden. Die Wandsegmente sind leicht V-förmig ausgebildet, d. h. der Abstand der gegenüberliegenden Wandsegmente liegen im Mundöffnungsbereich der Nut enger beieinander als im Bereich des Nutgrundes. Durch diese Ausgestaltung wird eine formschlüssige Nut-Feder-Verbindung geschaffen, bei welcher die Feder in der Nut verrastet. So können die beiden in dieser Weise verbundenen Hohlprofilelemente als Einheit gehandhabt werden. Darüber hinaus erlaubt die Verbindung einen gewissen Toleranzausgleich. Die PTC-Elemente sind keramische Bauteile, deren Dicke nicht immer identisch ausgebildet ist. Dickentoleranzen müssen durch Veränderung des Abstandes der beiden Hohlprofilelemente angepasst werden, sodass die PTC-Elemente mit ihrer Hauptseitenfläche gut wärmeleitend an den gegenüberliegenden Kontaktflächen anliegen. Durch angepasste Wahl der Tiefe der Nut kann die Feder hinreichend innerhalb der Nut und in einer Richtung orthogonal zu der Kontaktfläche wandern, ohne dass die formschlüssige Verbindung verloren geht. Diese Gestaltung ermöglicht ein Nachführen von Dickentoleranzen des PTC-Elementes.

Alternativ oder ergänzend kann das Formschlusssegment ein Sägezahnprofil umfassen, das eine formschlüssige Festlegung der Hohlprofile mit unterschiedlichem Abstand der einander gegenüberliegenden Kontaktflächen erlaubt. Bei dieser Ausgestaltung kann jeder Zahn des Sägezahnprofils eine Rastfläche des komplementären Formschlusssegmentes übergreifen. So bieten die einzelnen Zähne des Sägezahnprofils die Möglichkeit einer Festlegung der Hohlprofilelemente aneinander bei jeweils variierendem Abstand der einander gegenüberliegenden Kontaktflächen, die durch die beiden Hohlprofilelemente gebildet werden. Damit kann nicht nur die Variation der Dicke der einzelnen PTC-Elemente ausgeglichen werden. Vielmehr kann im Grunde für jede Dicke im Rahmen der zu erwartenden Dickentoleranz eine Festlegung der gegenüberliegenden Hohlprofilelemente aufgrund der Formschlusssegmente geschaffen werden, bei welcher das PTC-Element ohne beachtliches Spiel gegen die einander gegenüberliegenden Kontaktflächen anliegt, gegebenenfalls sogar unter Vorspannung, was eine solide Auskopplung der von dem PTC-Element erzeugten Wärme begünstigt.

Zur Vereinfachung der Montage wird gemäß einer bevorzugten Weiterbildung der vorliegenden Erfindung vorgeschlagen, die Formschlusssegmente so auszubilden, dass die Hohlprofilelemente orthogonal zu der Kontaktfläche beweglich und unverlierbar miteinander verbunden sind. Diese Weiterbildung lässt sich von der Überlegung leiten, dass nach dem Verbinden der Formschlusssegmente die beiden oder mehreren Hohlprofilelemente als Stapelung bereits zu einer Einheit gefügt sind, diese allerdings noch nicht die bestmögliche wärmeleitende Kontaktierung des PTC-Elementes an den zugeordneten Kontaktflächen bewirkt. Dazu wird üblicherweise die Stapelung von mehreren Hohlprofilelementen durch ein Spannmittel umgriffen, durch das die Kontaktflächen spielfrei, gegebenenfalls mit Vorspannung gegen das zugeordnete PTC-Element angelegt werden. Dies bedeutet nicht notwendig, dass die Kontaktflächen unmittelbar das PTC-Element berühren.

Als Spannmittel kann ein die Stapelung umgebendes und unter einer gewissen elastischen Vorspannung an den jeweils äußeren Hohlprofilelementen der Stapelung anliegendes Metallband vorgesehen sein. Die Spannung kann dabei durch Verformen des Metallbandes bewirkt werden. Alternativ können Bänder eines die Stapelung ganz oder teilweise umgreifenden Metallbandes auch nach Art einer Ratsche miteinander verbunden sein, sodass die gewünschte effektive Länge des Metallbandes und damit die Vorspannung der Stapelung über die miteinander zusammenwirkenden Formschlusssegmente erreichen lässt.

Die Hohlprofilelemente der erfindungsgemäßen elektrischen Heizvorrichtung dienen insbesondere der Übertragung der von dem PTC-Element beziehungsweise den PTC-Elementen erzeugten Wärme an das zu erwärmende Fluid. Es versteht sich, dass die durch Strangpressen hergestellten Hohlprofilelemente stirnseitig mit Komponenten zur Führung des Fluids abgedichtet verbunden sind. Das Fluid kann dabei die Stapelung der Hohlprofilelemente in einer Parallelschaltung und/oder einer Reihenschaltung durchsetzen. Bei einer Reihenschaltung hat jedes Hohlprofilelement bevorzugt zumindest zwei durch eine Trennwand getrennte Heizkanäle. Durch diese unterschiedlichen Heizkanäle kann das zu erwärmende Fluid in Reihe geschaltet sein. So sind gemäß dieser Weiterbildung die Hohlprofilelemente an einer Stirnseite mit einer Abdeckung versehen, durch die die Strömung von einem Fluidkanal des Hohlprofilelementes in den anderen Fluidkanal des Hohlprofilelementes umgelenkt wird. An der gegenüberliegenden Stirnseite ist ein Anschlussgehäuse vorgesehen, das einen der Fluidkanäle mit einer Einlassöffnung für das zu erwärmende Fluid und den anderen der Fluidkanäle mit einer Auslassöffnung für das zu erwärmende Fluid verbindet.

Durch die in einer Stapelung verwendeten Hohlprofilelemente können mehrere solcher in Reihe geschalteten Fluidströme zusätzlich parallel geschaltet und damit die Heizleistung der elektrischen Heizvorrichtung relativ einfach angepasst werden.

Gemäß einer bevorzugten Weiterbildung hat das Anschlussgehäuse elektrische Leitungswege, in der Regel Leiterbahnen aus Blechstreifen, mit denen das zumindest eine PTC-Element mit seinen gegenüberliegenden Seiten elektrisch leitend verbunden ist und die mit einer Schnittstelle für den Leistungsstrom verbunden sind. Das Anschlussgehäuse ist danach nicht nur für die Führung des Fluids, sondern auch für den elektrischen Anschluss des Leistungsstromes zur Bestromung des PTC-Elementes verwirklicht. Das Anschlussgehäuse kann dabei auch eine Steuervorrichtung für die Steuerung des Leistungsstromes in sich aufnehmen, die mit den elektrischen Leitungswegen der Leiterbahnen verbunden ist. Im Hinblick auf eine kompakte Ausgestaltung befindet sich dieses Steuergehäuse bevorzugt an einer Außenfläche zumindest eines der Hohlprofilelemente. Das Steuergehäuse liegt an dieser Außenfläche bevorzugt an, die sich rechtwinklig zu der Kontaktfläche erstreckt. Die entsprechende Außenfläche des Hohlprofilelementes erstreckt sich mit anderen Worten in etwa parallel zu der Erstreckungsrichtung der komplementären Formschlusssegmente.

Gemäß einer bevorzugten Weiterbildung der vorliegenden Erfindung weist die elektrische Heizvorrichtung ein Funktionsmodul auf, das über zumindest ein Formschlusssegment mit einem Hohlprofilelement verbunden ist. Bei einer Stapelung von mehreren Hohlprofilelement liegt das Funktionsmodul außen und damit in Höhenrichtung der gestapelten Hohlprofilelemente oben oder unten. Die Eignung der Formschlusssegmente zur Herstellung einer formschlüssigen Verbindung wird nach dieser Weiterbildung danach genutzt, ein Funktionsmodul mit der Stapelung der Hohlprofilelemente zu verbinden. Als Funktionsmodul kommt beispielsweise eine Halteeinrichtung zur Verbindung der elektrischen Heizvorrichtung an einem Chassis eines Fahrzeuges oder dergleichen zum Einsatz. Ein Funktionsmodul kann auch eine Pumpe zum Fördern des zu erwärmenden Fluids oder eine Steuereinrichtung zur Steuerung des Leistungsstromes sein. Das Funktionsmodul kann den Fluidkanal oder die Heizkammer zumindest teilweise ausbilden und kann als Strangpressprofil ausgebildet sein oder ein solches aufweisen.

Das Funktionsmodul umfasst bevorzugt ein stranggepresstes Profil, welches komplementäre Formschlusssegmente aufweist und über diese mit den Hohlprofilelementen verbunden ist und mechanische Schnittstellen in Form von Schlitzen oder Bohrungen aufweist, in die Befestigungselemente wie Schrauben oder Gewindestangen oder andere Formschlusssegmente eingreifen können. Mit solchen Funktionsmodulen kann das Gehäuse einer Pumpe oder einer Steuerung verbunden sein. Ebenso gut kann mit dem Funktionsmodul ein separates Befestigungselement zur Montage der elektrischen Heizvorrichtung an dem Chassis eines Fahrzeuges verbunden sein.

Die erfindungsgemäße elektrische Heizvorrichtung bietet danach die Möglichkeit, eine kleinste Einheit bestehend aus zwei Hohlprofilelementen und einem dazwischen vorgesehenen PTC-Element als voll funktionsfähigen Heizstrang einer elektrischen Heizvorrichtung auszubilden, wobei stirnseitig an den auf Länge geschnittenen Hohlprofilelementen Komponenten zur Führung des Fluides in die Hohlprofilelemente und aus diesen heraus vorgesehen sind. Die Fluidströme in den verschiedenen Hohlprofilelementen werden üblicherweise gebündelt. Der Vorteil, die jeweiligen Hohlprofilelemente einer Stapelung über die Formschlusssegmente miteinander zu einer Einheit zu verbinden und dementsprechend gemeinschaftlich zu handhaben, realisiert sich insbesondere bei einer Vielzahl von die Stapelung ausbildenden Hohlprofilelementen, durch die eine elektrische Heizvorrichtung mit einer wesentlich höheren Heizleistung bereit gestellt werden kann. Die Hohlprofilelemente sind dabei sowohl Teil des Gehäuses, welches das Fluid führt, als auch Aufnahme für weitere Funktionselemente der elektrischen Heizvorrichtung, beispielsweise das PTC-Element. Die Stapelung aus mehreren Hohlprofilelementen ist üblicherweise durch eine Steckverbindung gefügt. Das Verpressen der PTC-Heizeinrichtung innerhalb der Heizkammer zwischen den sich gegenüberliegenden Hohlprofilelementen erfolgt üblicherweise über ein separates Element in Form eines Spanners. Die Formschlusssegmente behindern dabei nicht die dazu notwendige Relativbewegung zwischen den einzelnen zu einer Stapelung verbundenen Hohlprofilelementen. Die Hohlprofilelemente haben üblicherweise eine im Wesentlichen rechteckige Grundform und sind lediglich von den Formschlusssegmenten überragt, die insofern auch einen EMV-Schutz bewirken und die den Leistungsstrom führenden Komponenten zwischen sich aufnehmen. Aufgrund der rechteckigen Grundform können Hohlprofilelemente nicht nur übereinander, sondern auch raumsparend unmittelbar nebeneinander angeordnet sein. Eine solche Heizzelle einer elektrischen Heizvorrichtung kann mit verschiedenen Zusatzkomponenten wie beispielsweise einer Halterung zur Montage, Pumpen oder einer Steuereinrichtung über die Formschlusssegmente verbunden werden.

Weitere Vorteile und Einzelheiten der vorliegenden Erfindung ergeben sich aus der nachfolgenden Beschreibung eines Ausführungsbeispiels in Verbindung mit der Zeichnung. In dieser zeigen:
- Figur 1: eine perspektivische Stirnseitenansicht eines Ausführungsbeispiels eines Hohlprofilelementes;
- Figur 2: eine perspektivische Stirnansicht von gefügten Formschlusssegmenten von zwei miteinander verbundenen Hohlprofilelementen;
- Figur 3: eine perspektivische Seitenansicht eines Ausführungsbeispiels einer elektrischen Heizvorrichtung;
- Figur 4: eine perspektivische Schnittansicht für ein gegenüber Figur 3 abgewandeltes Ausführungsbeispiel;
- Figuren 5a-d: perspektivische Stirnseitenansichten einer Stapelung mit verschiedenen Varianten von Klammem zum Verspannen der Stapelung;
- Figur 6: eine perspektivische Stirnseitenansicht eines weiteren Ausführungsbeispiels einer elektrischen Heizvorrichtung nach der vorliegenden Erfindung;
- Figur 7: eine Abwandlung zu dem Ausführungsbeispiel nach Figur 6;
- Figur 8: das Ausführungsbeispiel nach Figur 6 mit einem Ausführungsbeispiel eines Funktionsmoduls;
- Figur 9: eine Stapelung von Hohlprofilelementen in etwa gemäß Figur 7 und
- Figur 10: eine perspektivische Stirnansicht von gefügten Formschlusssegmenten von zwei über ein Sägezahnprofil miteinander verbundenen Hohlprofilelementen.

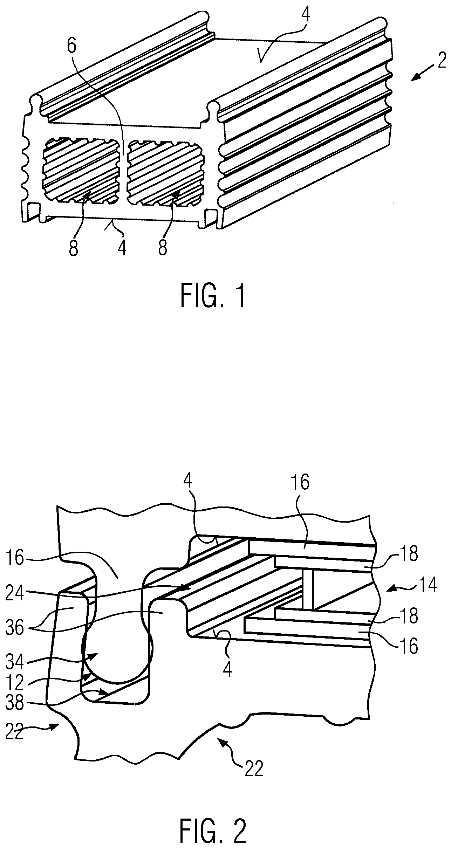

Die Figur 1 zeigt eine perspektivische Stirnseitenansicht eines Hohlprofilelementes 2 in Form eines Strangpressprofils mit im Wesentlichen rechteckiger Grundfläche. Von einander gegenüberliegenden Kontaktflächen 4 ragt eine Trennwand 6 ab, die einen mittleren Hohlraum des Hohlprofilelementes 2 in zwei Fluidkanäle 8 unterteilt. Die Kontaktflächen 4 werden randseitig oben von Federn 10 und unten von Nuten 12 überragt, die Formschlusssegmente im Sinne der vorliegenden Erfindung ausbilden. Diese Formschlusssegmente 10, 12 verlängern das Hohlprofilelement 2 in Höhenrichtung.

Figur 2 verdeutlicht das Fügen von zwei benachbarten Hohlprofilelementen 2.1 und 2.2. Zwischen einander gegenüberliegenden Kontaktflächen 4 der jeweiligen Hohlprofilelemente 2.1, 2.2 befindet sich eine PTC-Heizeinrichtung 14 mit zwei gegen die Hauptseitenfläche 4 angelegten Isolierlagen 16 in Form von separaten Keramikplatten. Diese Isolierlagen sind zwischen den Kontaktflächen 4 und Leiterbahnen 18 vorgesehen und stützen diese elektrisch isolierend gegenüber der Kontaktfläche 4 ab. Die Leiterbahnen 18 nehmen zwischen sich ein PTC-Element 20 und einen Positionsrahmen 22 auf, der in Längsrichtung L des Hohlprofilelementes mehrere PTC-Elemente 20 in einer Ebene hintereinander beabstandet.

Wie Figur 2 verdeutlicht, überragen die gefügten Formschlusssegmente 10, 12 eine zwischen den Hauptseitenflächen 4 ausgebildete Heizkammer 24 in Höhenrichtung. So wird die Heizkammer 24 elektromagnetisch nach außen abgeschirmt. Dabei spielt es keine Rolle, ob die Nut 12 und die Feder 10 jeweils die ihr zugeordnete Kontaktfläche 4 überragen. Wichtig ist lediglich, dass die Heizkammer 24 auch seitlich von dem metallischen Material der Hohlprofilelemente 2.1, 2.2 eingegrenzt ist. Die Hohlprofilelemente 2 bestehen vorliegend aus Aluminium.

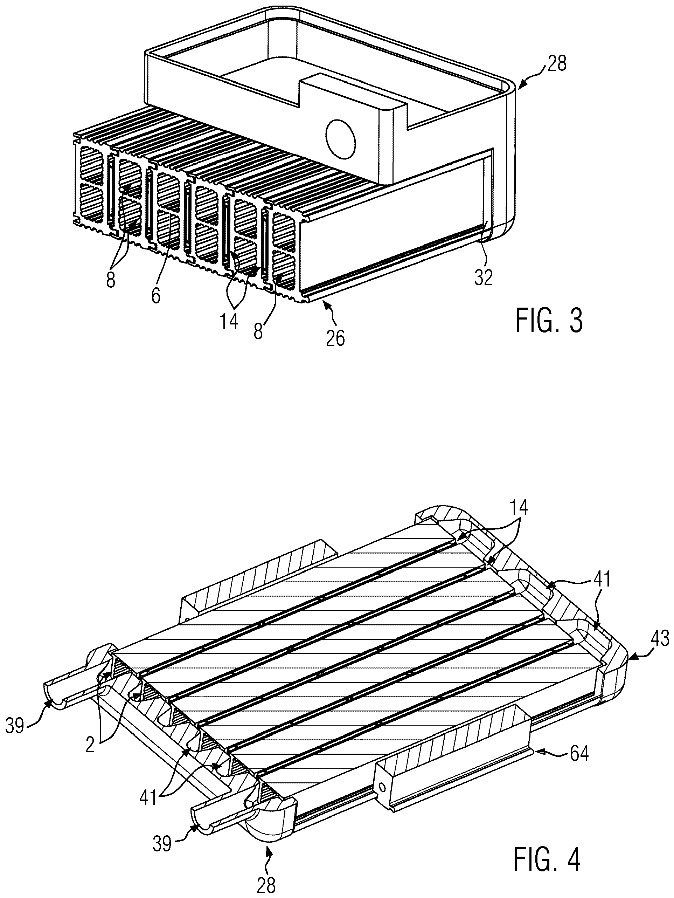

Die Figur 3 zeigt eine mit Bezugszeichen 26 gekennzeichnete Stapelung von mehreren, über die Formschlusssegmente 10, 12 miteinander verbundenen Hohlprofilelementen 2, die zwischen sich jeweils eine PTC-Heizeinrichtung 14 aufnehmen. An einer Stirnseite der Stapelung 26 ist ein Anschlussgehäuse 28 gezeigt, dass dichtend gegen die jeweiligen Fluidkanäle 8 angelegt und nicht dargestellte Ein- und Auslassöffnungen für das Einbringen und Herausleiten eines zu erwärmenden Fluids aus der elektrischen Heizvorrichtung ausbildet. Dieses Anschlussgehäuse 28 ist über eine Formdichtung gegenüber der Stapelung 26 abgedichtet. Die Abdichtung überdeckt auch die jeweiligen Heizkammern 24, sodass die PTC-Heizeinrichtungen 14 von dem zu führenden Fluid getrennt sind.

Die Figur 3 zeigt schematisch ein Steuergehäusesegment 30 des Anschlussgehäuses 28 zur Aufnahme einer nicht gezeigten Steuereinrichtung zur Steuerung des Leistungsstromes. Diese ist elektrisch mit den Leiterbahnen 18 der jeweiligen PTC-Heizeinrichtungen 14 verbunden. Dazu sind die aus Blechstreifen gebildeten Leiterbahnen 18 über die Stapelung 26 hinausgeführt. Das Anschlussgehäuse 28 kann Steckelementaufnahmen ausbilden, die beim Aufschieben des Anschlussgehäuses 28 mit den endseitig ausgebildeten Anschlussfahnen der Leiterbahnen 18 steckkontaktiert werden.

Bevorzugt weist das Anschlussgehäuse 28 seitlich die Stapelung 26 einfassende Wangenflächen 32 auf, die die Stapelung 26 verspannt, sodass die jeweiligen PTC-Heizeinrichtungen 14 mit einer gewissen Vorspannung gegen die zugeordneten Kontaktflächen 4 anliegen. Die Wangenflächen 32 sind jedenfalls so ausgebildet, dass diese mit der Kontur von Feder 10 und Nut 12 so zusammenwirken, dass das Anschlussgehäuse 28 formschlüssig gegenüber der Stapelung 26 festgelegt ist.

Die Festlegung der Hohlprofilelemente 2 gegeneinander über die jeweiligen Formschlusssegmente 10, 12 lässt sich aus Figur 2 entnehmen. Darin verdeutlicht Bezugszeichen 34 einen verbreiterten Kopf als Teil der Feder 10, der in der Nut 12 im Eingriff ist. Einander gegenüberliegende Wandsegmente 36, die die Nut 12 seitlich begrenzen, sind aufeinander zugeneigt. So ist der Mund der Nut 12 enger als ein Bereich der Nut 12 nahe ihres Nutgrundes 38. Dadurch sind die benachbarten Hohlprofilelemente 2 nach dem Einstecken der Feder 10 in die Nut 12 verrastet und unverlierbar miteinander verbunden.

In Figur 2 besteht noch ein hinreichender Abstand zwischen dem Kopf 34 und diesem Nutgrund 38. Dabei liegt bereits die PTC-Heizeinrichtung 14 an den sich gegenüberliegenden Kontaktflächen 4 an. Der entsprechende Freiraum zwischen dem Kopf 34 und dem Nutgrund 38 kann eine weitere Relativbewegung der Hohlprofilelemente 2 aufnehmen, wenn diese gegeneinander verspannt werden, um die Lagen der PTC-Heizeinrichtung 14 unter Vorspannung gegeneinander anzulegen.

Die Figur 4 verdeutlicht ein quergeschnittenes Ausführungsbeispiel mit mehreren Hohlprofilelementen 2, die zwischen sich jeweils PTC-Heizeinrichtungen 14 aufnehmen, wie dies unter Bezugnahme auf die vorherigen Figuren beschrieben ist. An der in Figur 4 linken Seite ist ein Anschlussgehäuse 28 mit Ein- und Auslassöffnungen 39 versehen, die durch Stutzen ausgebildet sind, die das eigentliche Anschlussgehäuse 28 überragen. Im Innern bildet dieses Anschlussgehäuse 28 Umlenkkammern 41 aus, die mit benachbarten Fluidkanälen 8 kommunizieren, um das strömende Medium von einem Fluidkanal 8 in den benachbarten Fluidkanal 8 zu überführen. In ähnlicher Weise ist einem mit Bezugszeichen 43 gekennzeichnete Abdeckung ausgebildet, die auf der dem Anschlussgehäuse 28 gegenüberliegenden Seite Umlenkkammern 41 für das strömende Fluid ausbildet.

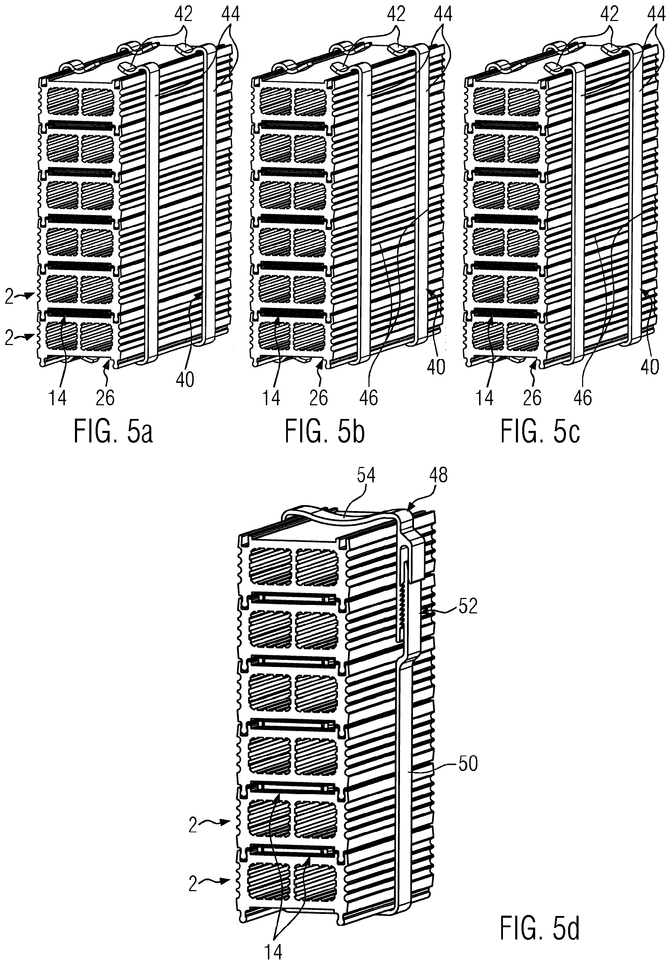

Diverse Möglichkeiten zum Verspannen der Hohlprofilelemente 2 ergeben sich aus den Figuren 5a-d.

Nach der Variante gemäß Figur 5a werden L-förmig umbogene Klammern 40 über die Stapelung 26 geschoben. Mit Bezugszeichen 42 gekennzeichnete Enden der Klammern sind gegenüber einem Steg 44 der Klammer 40 rechtwinklig abgebogen und konvex in Richtung auf die Stapelung 26 gekrümmt. So befinden sich die erhabenen Formschlusssegmente 10, 12 formschlüssig von der Klammer 40 umgriffen. Die Klammer 40 ist so dimensioniert, dass hierbei eine Vorspannkraft bewirkt wird, die jeweils über die Kontaktflächen 4 und durch die PTC-Heizeinrichtungen 14 hindurchgeleitet wird. Die Formschlusssegmente 10, 12 übertragen die Anpresskraft nicht. Diese Formschlusssegmente 10, 12 dienen lediglich der Festlegung der Hohlprofilelemente 2 in einer der Vorspannkraft entgegengesetzten Richtung.

In der Variante nach Figur 5b sind die Stege 44 in ihrer Mitte W-förmig umbogen und bilden dadurch ein Federsegment 46 aus, durch welches die Klammer 40 in der Lage ist, eine elastische Vorspannkraft in verbesserter Weise zu speichern.

Nach der Variante gemäß Figur 5c sind die Federsegmente 46 trapezförmig ausgeformt. Das Federsegment 46 kann ausgeformt werden, nachdem die Klammern 40 um die Stapelung 26 gelegt sind, indem ein Formwerkzeug die Federsegmente 46 durch Kaltverformung ausbildet und hierbei die gewünschte Spannkraft in der Klammer 40 einstellt. Dadurch können während der Herstellung der Heizvorrichtung sich addierende Toleranzen durch unterschiedliche Dicken der einzelnen PTC-Elemente ausgeglichen werden.

Diese Wirkung zeigt auch die Variante nach Figur 5d. Diese zeigt eine die Stapelung 26 umfänglich umgebende Klammer 40 bestehend aus einer ersten Klammerkomponente 48 und einer zweiten Klammerkomponente 50, die jeweils U-förmig umbogen sind. Die Klammerkomponenten 48, 50 werden durch eine Formschlussverbindung 52 miteinander verbunden, die eine Vielzahl von miteinander zusammenwirkenden Zähne umfasst, sodass die beiden Klammerkomponenten 48, 50 auf den zum Verspannen der Stapelung 26 gewünschten Umfang zusammengeschoben und gegeneinander festgelegt werden können. Auf den äußeren freiliegenden Kontaktflächen 4 liegt ein in Richtung auf die Stapelung 26 konvex gekrümmter Kopfabschnitt 54 der jeweiligen Klammerkomponenten 48, 50 unter elastischer Vorspannung an.

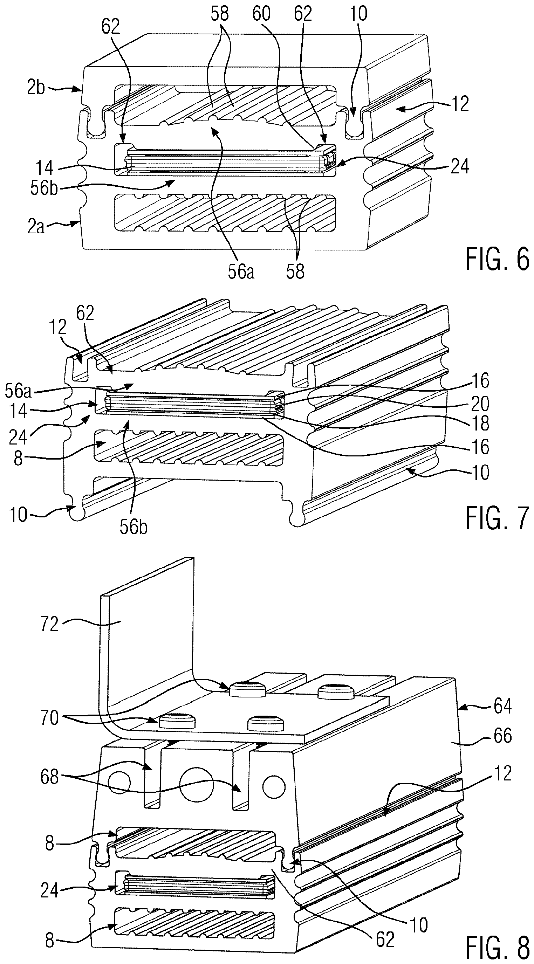

In dem Ausführungsbeispiel nach Figur 6 hat die elektrische Heizvorrichtung ein erstes Hohlprofilelement 2a und ein zweites Hohlprofilelement 2b, die über eine Feder 10 und eine korrespondierend dazu vorgesehene Nut miteinander verbunden sind, wobei in der Heizkammer 24 die PTC-Heizeinrichtung 14 vorgesehen ist. Von Hauptwandungen 56a, b, die zwischen sich den Fluidkanal 8 einschließen, ragen Rippen 58 ab, die einteilig an dem Hohlprofilelementen 2 ausgeformt sind und die Wärmeübertragung zwischen der PTC-Heizeinrichtung 12 und dem Fluid in den Fluidkanälen 8 verbessern sollen.

Bei dem Ausführungsbeispiel nach den Figuren 6 bis 9 ist die PTC-Heizeinrichtung 14 durch Klemmung zwischen den Hauptseitenwandungen 56a, b mit guter Wärmeleitfähigkeit in dem jeweiligen Hohlprofilelement 2a gehalten. Die mit Bezugszeichen 56a gekennzeichnete Hauptwandung ist ballig ausgeformt und dementsprechend mittig versteift. Die Kontaktfläche 4 ist über eine Stufe 60 in Richtung auf die PTC-Heizeinrichtung 14 vorragend ausgebildet. Zwischen dieser Stufe 60 und einem Seitenrand des Hohlprofils sind randseitige Verformungsbereiche 62 mit vermindertem Querschnitt ausgebildet. Dort kann ein Verformungswerkzeug einwirken. Die dabei aufgebrachte Verformungskraft wirkt außerhalb der Anlagefläche des Hohlprofilelementes 2a zu der PTC-Heizeinrichtung 14. Bei dieser Verformung kann das Hohlprofilelement 2a randseitig eingefasst sein, sodass das Verformungswerkzeug lediglich lokal auf den Verformungsbereich 62 einwirkt, die Grundform des Hohlprofilelementes 2a aber ansonsten unverändert bleibt. Das Behindern der Ausgleichsbewegung des Hohlprofilelementes 2a verbessert die Anlage der PTC-Heizeinrichtung 14 unter Vorspannung gegen die Kontaktflächen 4.

In Figur 7 ist ein Hohlprofilelement 2 gezeigt, welches sich in eine Stapelung von mehreren Hohlprofilelementen integrieren lässt. Dieses Ausführungsbeispiel hat eine Heizkammer 24, wie zuvor beschrieben, in welcher in der zuvor beschriebenen Weise die PTC-Heizeinrichtung 14 untergebracht ist. Dieses Hohlprofilelement 2 hat auf gegenüberliegenden Seiten jeweils Formschlusssegmente in Form einer Nut 12 (oben) und in Form einer Feder 10 (unten).

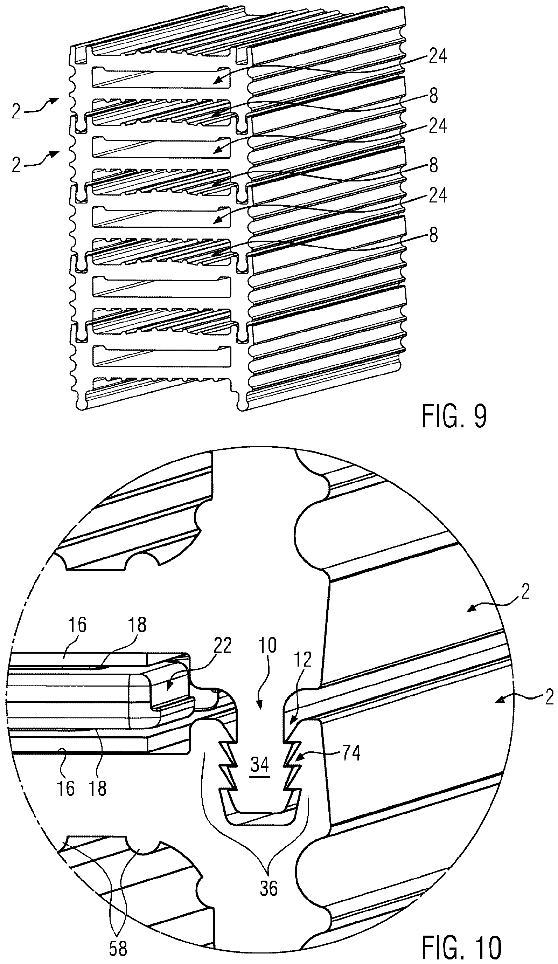

Die Figur 9 verdeutlicht eine Stapelung 26 bestehend aus solchen Hohlprofilelementen 2. Diese Stapelung 26 kann wie zuvor unter Bezugnahme auf die Figuren 5a-d beschrieben mit zumindest einem Klammersegment umgeben sein. Zur Abdichtung der einzelnen Fluidkanäle 8, die jeweils durch zwei Hohlprofilelemente 2 begrenzt sind, kann in die Nut 12 ein dauerelastisches Dichtmittel oder ein abbindender Kleber eingefüllt werden. Zusätzlich oder alternativ kann ein solches Dichtmittel auch endseitig gegen die Wandsegmente angelegt sein.

Die Figur 8 zeigt eine Variante des Ausführungsbeispiels nach Figur 6. Mit Bezugszeichen 64 ist ein Funktionsmodul gekennzeichnet, welches ein Strangpressprofil 66 umfasst. Dieses Strangpressprofil hat Formschlusssegmente in Form von randseitig vorgesehenen Federn 10, die in die Nuten 12 des Hohlprofilelementes 2a eingreifen und hierdurch einen der Fluidkanäle 8 abdichten. Das Strangpressprofil 66 hat zwei zur Hauptseite hin offene Befestigungsnuten 68, in die selbstschneidende Schrauben 70 eingeschraubt sind, die ein Winkelblech 72 durchsetzen, über welches die elektrische Heizvorrichtung beispielsweise an dem Chassis eines Fahrzeuges montiert werden kann.

Die Figur 10 verdeutlicht Formschlusssegmente mit korrespondierendem Sägezahnprofil 74. Sägezähne sind dabei auf beiden Seiten des Kopfes 34 und den Innenflächen der Wandsegmente 36 vorgesehen. Dieses Sägezahnprofil wirkt wie eine Ratsche. Die Hohlprofileelemente 2 können mit unterschiedlichem Abstand relativ zueinander formschlüssig festgelegt werden. Ein Toleranzausgleich erfolgt dabei zusätzlich auch durch Isolierlagen 16 mit kompressiblen Eigenschaften, deren Dicke unter Speicherung von elastischer Vorspannung veränderbar ist. Die Isolierlagen 16 sind mit Abstand zu der seitlichen Begrenzung der Heizkammer 24 vorgesehen. Die Isolierlagen 16 sind dementsprechend weniger breit als die Heizkammer 24. Die Isolierlagen 16 können dementsprechend in Breitenrichtung gedehnt werden.

### Bezugszeichenliste

- 2: Hohlprofilelement
- 4: Kontaktfläche
- 6: Trennwand
- 8: Fluidkanal
- 10: Feder
- 12: Nut
- 14: PTC-Heizeinrichtung
- 16: Isolierlage
- 18: Leiterbahn
- 20: PTC-Element
- 22: Positionsrahmen
- 24: Heizkammer
- 26: Stapelung
- 28: Anschlussgehäuse
- 30: Steuergehäusesegment
- 32: Wangenflächen
- 34: Kopf
- 36: Wandsegment
- 38: Nutgrund
- 39: Ein- bzw. Auslassöffnung
- 40: Klammer
- 41: Umlenkkammer
- 42: Ende der Klammer
- 43: Abdeckung
- 44: Steg
- 46: Federsegment
- 48: Erste Klammerkomponente
- 50: Zweite Klammerkomponente
- 52: Formschlussverbindung
- 54: Kopfabschnitt
- 56a,b: Hauptwandung
- 58: Rippe
- 60: Stufe
- 62: Verformungsbereich
- 64: Funktionsmodul
- 66: Strangpressprofil
- 68: Befestigungsnut
- 70: Schraube
- 72: Winkelblech
- 74: Sägezahnprofil

## Patentansprüche

1. Elektrische Heizvorrichtung mit zumindest zwei Hohlprofilelementen (2), die einen Fluidkanal (8) für ein zu erwärmendes Fluid und gegenüberliegend zu dem Fluidkanal (8) eine Heizkammer (24) ausbilden, die von gegenüberliegenden Kontaktflächen (4) begrenzt ist, an denen zumindest ein PTC-Element (20) wärmeleitend anliegt, **dadurch gekennzeichnet, dass** die Hohlprofilelemente (2) durch komplementäre Formschlusssegmente (10, 12) miteinander verbunden sind, so dass die beiden Formschlusssegmente (10,12) auch in einer ersten Richtung orthogonal zu der Kontaktflächen (4) eine Verbindung der Hohlprofilelemente (2) schaffen.

2. Elektrische Heizvorrichtung nach Anspruch 1, **dadurch gekennzeichnet, dass** der Fluidkanal (8) oder die Heizkammer (24) seitlich von den komplementären Formschlusssegmenten (10, 12) begrenzt sind.

3. Elektrische Heizvorrichtung nach Anspruch 1 oder 2, **dadurch gekennzeichnet, dass** die Formschlusssegmente (10, 12) eine Nut-Feder-Verbindung ausbilden und dass die Feder (10) formschlüssig in der Nut (12) verrastet ist.

4. Elektrische Heizvorrichtung nach einem der vorherigen Ansprüche, **dadurch gekennzeichnet, dass** die Formschlusssegmente (10, 12) ein Sägezahnprofil (74) umfassen, das eine formschlüssige Festlegung der Hohlprofileelemente (2) mit unterschiedlichem Abstand der einander gegenüberliegenden Kontaktflächen (4) erlaubt.

5. Elektrische Heizvorrichtung nach einem der vorherigen Ansprüche, **dadurch gekennzeichnet, dass** die Formschlusssegmente (10, 12) so ausgebildet sind, dass die Hohlprofilelemente (2) in einer zweiten Richtung orthogonal zu der Kontaktfläche (4) beweglich und unverlierbar miteinander verbunden sind.

6. Elektrische Heizvorrichtung nach einem der vorherigen Ansprüche, **dadurch gekennzeichnet, dass** jedes Hohlprofilelement (2) zumindest zwei durch eine Trennwand (6) getrennte Fluidkanäle (8) ausbildet und dass die Hohlprofilelemente (2) an einer Stirnseite mit einer Abdeckung (43) versehen sind, durch die die Strömung von einem Fluidkanal (8) des Hohlprofilelementes (2) in den anderen Fluidkanal (8) des Hohlprofilelementes (2) umgelenkt wird, und dass das Hohlprofilelement (2) gegenüberliegend mit einem Anschlussgehäuse (28) versehen ist, das einen der Fluidkanäle (8) mit einer Einlassöffnung (39) für das zu erwärmende Fluid und den anderen der Fluidkanäle (8) mit einer Auslassöffnung (39) für das zu erwärmende Fluid verbindet.

7. Elektrische Heizvorrichtung nach Anspruch 6, **dadurch gekennzeichnet, dass** das Anschlussgehäuse (28) elektrische Leitungswege aufweist, die Leiterbahnen (18), die mit dem PTC-Element (20) elektrisch leitend verbunden sind, mit einer Schnittstelle für den Leistungsstrom verbindet.

8. Elektrische Heizvorrichtung nach Anspruch 7, **dadurch gekennzeichnet, dass** die elektrischen Leitungswege die Leiterbahnen (18) mit einem Steuergehäuse (30) verbinden, das eine Steuereinheit für die Steuerung des Leistungsstromes in sich aufnimmt und an einer Außenfläche zumindest eines der Hohlprofilelemente (2) anliegt, die sich rechtwinklig zu der Kontaktfläche (4) erstreckt.

9. Elektrische Heizvorrichtung nach Anspruch 7 oder 8, **dadurch gekennzeichnet, dass** das Anschlussgehäuse (28) und das Steuergehäuse (30) in einem gemeinsamen Bauteil (28) ausgebildet sind, das fluiddicht stirnseitig mit den Hohlprofilelementen (2) verbunden ist.

10. Elektrische Heizvorrichtung nach einem der vorherigen Ansprüche, **dadurch gekennzeichnet, dass** die Hohlprofilelemente (2) der elektrischen Heizvorrichtung von einem Spannmittel (40) umgriffen sind.

11. Elektrische Heizvorrichtung nach einem der vorherigen Ansprüche, **dadurch gekennzeichnet, dass** ein Funktionsmodul (64) über zumindest eines der außen an einer Stapelung (26) von Hohlprofilelementen (2) freiliegenden Formschlusssegmenten (10, 12) mit der Stapelung (26) verbunden ist.

## Claims

1. Electric heating device with at least two hollow profile elements (2) which form a fluid channel (8) for a fluid to be heated and, opposite the fluid channel (8), a heating chamber (24) which is bounded by opposite contact surfaces (4) against which at least one PTC element (20) abuts in a heat-conducting manner, **characterized in that** the hollow profile elements (2) are connected to one another by complementary form-fit segments (10, 12) such that the two form-fit segments (10, 12) also provide a connection of the hollow profile elements (2) in a first direction orthogonal to the contact surfaces (4).

2. Electric heating device according to claim 1, **characterized in that** the fluid channel (8) or the heating chamber (24) is laterally delimited by the complementary form-fit segments (10, 12).

3. Electric heating device according to claim 1 or 2, **characterized in that** the form-fit segments (10, 12) form a tongue and groove connection and that the tongue (10) is positively locked in the groove (12).

4. Electric heating device according to one of the preceding claims, **characterized in that** the form-fit segments (10, 12) comprise a saw tooth profile (74) which allows a positive locking of the hollow profile elements (2) with different distance of the opposing contact surfaces (4).

5. Electric heating device according to one of the preceding claims, **characterized in that** the form-fit segments (10, 12) are configured such that the hollow profile elements (2) are movably and captively connected to each other in a second direction orthogonally to the contact surface (4).

6. Electric heating device according to one of the preceding claims, **characterized in that** each hollow profile element (2) forms at least two fluid channels (8) separated by a partition wall (6), and **in that** the hollow profile elements (2) are provided on one end face with a cover (43) through which the flow from one fluid channel (8) of the hollow profile element (2) is deflected into the other fluid channel (8) of the hollow profile element (2) and **in that** the hollow profile element (2) is provided opposite thereto with a connection housing (28) which connects one of the fluid channels (8) to an inlet opening (39) for the fluid to be heated and the other of the fluid channels (8) to an outlet opening (39) for the fluid to be heated.

7. Electric heating device according to claim 6, **characterized in that** the connection housing (28) comprises electrical conduction paths connecting strip conductors (18), which are electrically conductively connected to the PTC element (20), to an interface for the power current.

8. Electric heating device according to claim 7, **characterized in that** the electrical conduction paths connect the strip conductors (18) to a control housing (30) which accommodates therein a control unit for controlling the power current and abuts an outer surface of at least one of the hollow profile elements (2) extending perpendicularly to the contact surface (4).

9. Electric heating device according to claim 7 or 8, **characterized in that** the connection housing (28) and the control housing are formed in a common component (28) which is connected in a fluid-tight manner at the end face to the hollow profile elements (2).

10. Electric heating device according to one of the preceding claims, **characterized in that** the hollow profile elements (2) of the electric heating device are encompassed by a clamping means (40).

11. Electric heating device according to one of the preceding claims, **characterized in that** a functional module (64) is connected to the stack (26) via at least one of the form-fit segments (10, 12) exposed on the outside of a stack (26) of hollow profile elements (2).

## Revendications

1. Dispositif de chauffage électrique comprenant au moins deux éléments profilés creux (2) qui forment un canal de fluide (8) pour un fluide à chauffer et, à l'opposé du canal de fluide (8), une chambre de chauffage (24) qui est délimitée par des surfaces de contact opposées (4) sur lesquelles au moins un élément PTC (20) est placé de manière thermoconductrice, **caractérisé en ce que** les éléments profilés creux (2) sont reliés entre eux par des segments de complémentarité de formes complémentaires (10, 12), de sorte que les deux segments de complémentarité de formes (10, 12) créent également une liaison des éléments profilés creux (2) dans une première direction orthogonale aux surfaces de contact (4).

2. Dispositif de chauffage électrique selon la revendication 1, **caractérisé en ce que** le canal de fluide (8) ou la chambre de chauffage (24) sont délimités latéralement par les segments de complémentarité de formes complémentaires (10, 12).

3. Dispositif de chauffage électrique selon la revendication 1 ou 2, **caractérisé en ce que** les segments de complémentarité de formes (10, 12) forment une liaison rainureressort et **en ce que** le ressort (10) est encliqueté dans la rainure (12) par complémentarité de formes.

4. Dispositif de chauffage électrique selon l'une quelconque des revendications précédentes, **caractérisé en ce que** les segments de complémentarité de formes (10, 12) comprennent un profil en dents de scie (74) qui permet une fixation par complémentarité de formes des éléments profilés creux (2) avec un écart différent entre les surfaces de contact (4) opposées.

5. Dispositif de chauffage électrique selon l'une quelconque des revendications précédentes, **caractérisé en ce que** les segments de complémentarité de formes (10, 12) sont conçus de telle sorte que les éléments profilés creux (2) sont reliés entre eux de manière mobile et imperdable dans une seconde direction orthogonale à la surface de contact (4).

6. Dispositif de chauffage électrique selon l'une quelconque des revendications précédentes, **caractérisé en ce que** chaque élément profilé creux (2) forme au moins deux canaux de fluide (8) séparés par une paroi de séparation (6) et **en ce que** les éléments profilés creux (2) sont munis, sur une face frontale, d'un couvercle (43) à travers lequel l'écoulement est dévié à partir d'un canal de fluide (8) de l'élément profilé creux (2) jusque dans l'autre canal de fluide (8) de l'élément profilé creux (2), et **en ce que** l'élément profilé creux (2) est muni, de manière opposée, d'un boîtier de raccordement (28) qui relie l'un des canaux de fluide (8) à une ouverture d'entrée (39) pour le fluide à chauffer et l'autre des canaux de fluide (8) à une ouverture de sortie (39) pour le fluide à chauffer.

7. Dispositif de chauffage électrique selon la revendication 6, **caractérisé en ce que** le boîtier de raccordement (28) présente des pistes de conduction électrique qui relient des pistes conductrices (18), qui sont connectées de manière électriquement conductrice à l'élément PTC (20), à une interface pour le courant de puissance.

8. Dispositif de chauffage électrique selon la revendication 7, **caractérisé en ce que** les pistes de conduction électrique relient les pistes conductrices (18) à un boîtier de commande (30) qui reçoit une unité de commande pour la commande du courant de puissance et est placé contre une surface extérieure d'au moins un des éléments profilés creux (2) qui s'étend perpendiculairement à la surface de contact (4).

9. Dispositif de chauffage électrique selon la revendication 7 ou 8, **caractérisé en ce que** le boîtier de raccordement (28) et le boîtier de commande (30) sont réalisés dans un composant commun (28) qui est relié de manière étanche aux fluides côté frontal aux éléments profilés creux (2).

10. Dispositif de chauffage électrique selon l'une quelconque des revendications précédentes, **caractérisé en ce que** les éléments profilés creux (2) du dispositif de chauffage électrique sont enserrés par un moyen de serrage (40).

11. Dispositif de chauffage électrique selon l'une quelconque des revendications précédentes, **caractérisé en ce qu'**un module fonctionnel (64) est relié à l'empilement (26) par au moins l'un des segments de complémentarité de formes (10, 12) exposés à l'extérieur sur un empilement (26) d'éléments profilés creux (2).
